# FASCICULE DE BREVET EUROPEEN

(11) **EP 4 151 708 B1**
(45) Date de publication et mention de la délivrance du brevet: **26.11.2025**
(21) Numéro de dépôt: 22196832.4
(22) Date de dépôt: 21.09.2022
(51) Int. Cl.: C12H 1/22, B65D 8/00, B65D 81/38, C12L 11/00, C12C 13/08

(54) **CONTENANT DE FERMENTATION, D'ÉLEVAGE OU DE STOCKAGE D'UNE PRÉPARATION ALIMENTAIRE ALCOOLISÉE**
BEHÄLTER ZUR GÄRUNG, AUFZUCHT ODER LAGERUNG EINES ALKOHOLISCHEN LEBENSMITTELPRÄPARATS
CONTAINER FOR FERMENTATION, REARING OR STORING AN ALCOHOLIC FOOD PREPARATION

(30) Priorité: 21.09.2021 FR 2109928
(43) Date de publication de la demande: 22.03.2023
(73) Titulaire: Tonnellerie Taransaud, 16100 Merpins (FR)
(72) Inventeur: LITOUX-DESRUES, François, 33170 GRADIGNAN (FR); GILLET, David, 17100 SAINTES (FR); TEISSIER DU CROS, Rémi, 16100 COGNAC (FR); SIX, Thierry, 16100 COGNAC (FR)
(74) Mandataire: Regimbeau

(56) Documents cités:
- FR-A1- 2 602 832
- US-A- 2 224 632

## Description

### DOMAINE DE L'INVENTION

L'invention concerne les contenant de fermentation, d'élevage ou de stockage d'une préparation alimentaire.

### ETAT DE LA TECHNIQUE

Les contenants tels que les cuves, foudres et fûts en bois peuvent être utilisés à la fois en vinification et en élevage. Ils sont utilisés depuis des siècles pour l'élaboration des grands vins, eaux de vies, bières, en fait pour la fabrication de toutes boissons alcoolisées.

Le bois de chêne permet à la fois la bonne réalisation des fermentations et de l'élevage à la fois du fait de ses propriétés thermiques mais aussi de ses propriétés physico-chimiques singulières. Le bois est connu pour l'apport de tanins et de composés polyphénoliques du bois qui permettent la stabilisation et la structuration polyphénolique des boissons, notamment la couleur mais aussi le volume, la texture et la longueur en bouche.

Il est communément admis que le bois est un isolant thermique. Pourtant son emploi dans une cuve, un foudre ou une cuve de vin ou de boisson alcoolisée entraine l'imprégnation de la paroi sur une couche de plusieurs millimètres de bois par une solution hydro-alcoolique issue de la boisson fermentée ou élevée. Cette couche imprégnée ainsi que le gradient d'humidité vers l'extérieur du contenant confèrent au bois des propriétés de conduction thermiques non négligeables, au point qu'il n'est pas utile de thermo-réguler un fût de 225 L de moût de raisin en fermentation alcoolique, pourtant fortement exothermique, les échanges au travers de la coque et des fonds suffisant à maintenir le moût en fermentation en dessous de 25°C dans des conditions de chai tempérées. C'est surtout lorsque l'on souhaite fermenter des volumes supérieurs et significativement à partir de volumes de 500 L que la question d'adjoindre des moyens supplémentaires de refroidissement se pose.

Ainsi les cuves de fermentations en bois de 1000 L contiennent en général un échangeur en inox permettant a minima d'éviter de trop forts échauffements au pic de la fermentation et de manière optimale de réguler la température selon la recette souhaitée à chaque instant de la fermentation. Or cette fonction optimale est rarement remplie de façon satisfaisante du fait précisément des interférences avec la capacité thermique de la coque en bois. Dès que l'on souhaite maintenir en cuve des conditions qui s'écartent significativement des conditions de chai, par exemple si l'on souhaite maintenir le moût au frais en dessous de 15°C alors que la température du chai est de 25°C, ou inversement si l'on souhaite maintenir le marc au-dessus de 25°C alors que les nuits sont fraiches, alors les flux thermiques au travers du bois ne sont plus négligeables et s'opposent à l'itinéraire technique choisi. US 2 224 632 A (GILES WILLIAM T) 10 décembre 1940 (1940-12-10) décrit un contenant de fermentation, d'élevage ou de stockage d'une préparation alimentaire, le contenant comprenant une paroi externe en bois et une paroi interne en acier inoxydable entre lesquelles un liquide de refroidissement est mis en circulation.

FR 2 602 832 A1 (SPIREC [FR]) 19 février 1988 (1988-02-19) décrit un appareil remonte liquide comprenant un échangeur de chaleur dans une double paroi placée un conteneur. La nature des parois n'est pas précisée.

Il est courant de prévoir à cette fin un échangeur installé dans l'enceinte de la cuve. On connait ainsi deux types d'échangeurs, à savoir les échangeurs de type drapeau et les échangeurs de type serpentin.

Un échangeur de type drapeau s'étend dans la cuve suivant un plan vertical ayant une orientation radiale par référence à un axe de la cuve. Il s'étend donc depuis l'axe de la cuve jusqu'à sa paroi, d'un seul côté de l'axe. Un échangeur de type serpentin a quant à lui une forme cylindrique définie par l'enroulement hélicoïdal du serpentin d'échange thermique. L'échangeur est disposé dans la cuve avec son axe vertical. Dans une version compacte, il est situé d'un seul côté de l'axe, le diamètre du cylindre étant alors inférieur au rayon de la cuve. Dans une version périphérique, son axe est confondu avec celui de la cuve, auquel cas le serpentin s'étend dans la cuve tout autour de l'axe.

Ces échangeurs ont pour objectif de réguler la température à l'intérieur des cuves. Pour assurer une bonne efficacité de l'échangeur, deux points doivent être pris en compte lors de la conception des contenants en bois.

Le premier est le positionnement. En effet, le positionnement de l'échangeur est un point clé dans la bonne maitrise de la température. Trop haut, il rend difficile le réchauffement, trop bas le refroidissement n'est pas optimal. C'est pourquoi il est important de concevoir un échangeur qui s'étend sur la plus grande hauteur possible. De plus, le manque d'homogénéité de la température à l'intérieur de la cuve (par exemple, en fermentation, la température du chapeau de marc est supérieure à la température du vin) rend difficile le positionnement de la sonde qui sert à piloter la régulation.

Le deuxième point à prendre en compte est le dimensionnement de l'échangeur. En effet, la surface d'échange doit être en adéquation avec les besoins thermiques (calories et frigories) définis lors de l'étude thermique. L'échangeur doit aussi avoir une dimension adaptée aux capacités de l'installation thermique.

Par ailleurs l'encombrement des dispositifs additionnels d'échange thermique, serpentins ou drapeaux empêche de correctement remuer les raisins et le moût au voisinage des parois et donc d'homogénéiser le marc au moment des remontages, délestages ou pigeage dans la vinification en rouge.

Enfin ces dispositifs présentent des zones de rétention ou aveugles qui sont difficiles à nettoyer.

Par ailleurs, nous avons mis en évidence que la conductivité thermique du bois était suffisante pour réaliser des échanges thermiques entre le milieu externe (chai) et interne (moût ou vin) et qu'elle augmentait sensiblement avec l'augmentation de la teneur en eau dans le bois. On comprend alors que la température du chai a une incidence sur la température du liquide présent à l'intérieur du contenant en bois.

Nous constatons donc que le bois présente une conductivité thermique non négligeable et qu'il joue donc un rôle important d'interface entre le vin et le chai. L'échange thermique étant possible au travers de l'épaisseur du bois, on comprend aisément que la coque de la cuve peut donc dès lors être considérée comme la plus grande surface d'échange thermique dans le système. Et ce grand échangeur joue en général un rôle adverse à celui du serpentin ou du drapeau, puisqu'il permet l'échange de chaleur avec l'air du chai. En d'autres termes la coque est une grande source de pertes thermiques.

Un but de l'invention est de faciliter la régulation thermique de la préparation contenue dans le contenant.

### EXPOSE DE L'INVENTION

A cet effet, on prévoit un contenant de fermentation, d'élevage ou de stockage d'une préparation alimentaire,
le contenant comprenant :
- au moins une paroi principale en bois présentant des faces interne et externe, et
- au moins un serpentin apte à recevoir un fluide caloporteur et comprenant des tronçons principaux s'étendant intégralement dans la paroi entre les faces interne et externe.

Ainsi, l'invention permet d'utiliser la paroi en bois du contenant comme échangeur. Les intérêts sont multiples :
- nous n'avons donc plus d'opposition à gérer entre un échangeur interne et le défaut d'isolement du bois imbibé ;
- la paroi du contenant offre une grande surface d'échange thermique qui permet de travailler avec une différence de température moins grande entre l'objectif à atteindre et la température du fluide du fluide caloporteur. Cela permet d'envisager des économies d'énergie et rend la régulation thermique plus rapide et plus efficace ; et
- le nettoyage de l'intérieur du contenant est facilité car il ne s'y trouve plus d'échangeur thermique, celui-ci étant intégré à la paroi.

Le fluide peut servir au chauffage ou au refroidissement du contenant en fonction des besoins de son contenu. La température du fluide, notamment s'il s'agit d'eau, peut varier de 0 à 40°C en fonction des besoins en refroidissement/chauffage. Il peut être à une température inférieure à 0°C pour le refroidissement, notamment s'il s'agit d'eau glycolée. Le serpentin peut être formé par un tuyau rigide ou souple. Ainsi, l'invention procure un mode de régulation intelligent qui tire parti des propriétés thermiques du bois plutôt que de lutter contre. Elle permet de stopper les pertes thermiques à travers la paroi et d'effectuer une régulation thermique par le vecteur du bois lui-même.

Le contenant selon l'invention peut être notamment une cuve, un tonneau, un foudre ou une barrique.

On entend par « face interne » une face de la paroi orientée vers l'intérieur du contenant, et par « face externe », une face orientée vers l'extérieur.

Avantageusement, les tronçons principaux s'étendent suivant une direction parallèle aux faces interne et externe ou concentrique aux faces interne et externe.

La mise en place du serpentin se trouve ainsi facilité.

On peut prévoir que les tronçons principaux s'étendent intégralement à distance des faces interne et externe, par exemple à égale distance de ces faces.

L'humidité du bois présente un gradient positif de l'extérieur vers l'intérieur du contenant lorsqu'il est plein de mout ou de vin, et de surcroit sur une épaisseur de plusieurs millimètres il est même imbibé de liquide depuis la face intérieure. Si l'échangeur est placé dans l'épaisseur, notamment à distance égale des deux faces, une fois que la paroi est imprégnée d'eau, la conductivité thermique est meilleure vers l'intérieur que vers l'extérieur.

Avantageusement, la paroi principale est une paroi latérale.

Ainsi, l'échange thermique peut se faire sur une grande partie de la hauteur du contenant, voire sur toute sa hauteur, ce qui améliore l'homogénéisation du contenu.

On peut prévoir que la paroi principale est une paroi de fond, un plafond ou une paroi d'extrémité du contenant.

On peut prévoir que la paroi comprend des éléments de paroi.

Ces éléments peuvent être des douelles dans le cas d'une paroi verticale. Il peut s'agir de couches minces prenant en sandwich le serpentin dans le sens de l'épaisseur de la paroi lorsque la paroi est une paroi de fond, de plafond ou une paroi d'extrémité.

On peut prévoir qu'au moins certains des éléments de paroi présentent au moins une cavité recevant le serpentin.

Dans un mode de réalisation, la cavité comprend une rainure.

Ainsi les tronçons principaux sont interposés entre les éléments de paroi, ce qui facilite l'assemblage du contenant.

On peut prévoir que la rainure s'étend sur au moins deux chants de l'élément de paroi, par exemple sur trois chants.

Par exemple, au moins un des tronçons principaux est reçu dans les rainures de deux des éléments de paroi respectifs en étant interposé entre les éléments de paroi.

Dans un autre mode de réalisation, la cavité comprend un orifice s'étendant d'un premier chant de l'élément de paroi à un deuxième chant de l'élément de paroi.

On peut prévoir qu'au moins certains des tronçons principaux s'étendent suivant une direction parallèle à un axe du contenant.

On peut aussi prévoir qu'au moins certains des tronçons principaux s'étendent suivant une direction circonférentielle à un axe du contenant.

On prévoit également selon l'invention un échangeur thermique comprenant :
- au moins une paroi principale en bois présentant des faces externes, et
- au moins un serpentin apte à recevoir un fluide caloporteur et s'étendant intégralement dans la paroi entre les faces externes.

On prévoit aussi selon l'invention un contenant de fermentation, d'élevage ou de stockage d'une préparation alimentaire,
le contenant comprenant :
- au moins une paroi délimitant une enceinte interne du contenant, et
- au moins un échangeur conforme à l'invention et reçu dans l'enceinte de sorte que les faces externes de l'échangeur s'étendent dans l'enceinte.

Cet échangeur thermique fonctionne de la même façon que la paroi du contenant selon l'invention et présente les mêmes avantages. Mais, cette fois, l'échangeur est tout entier logé à l'intérieur de l'enceinte et forme un élément rapporté. Il peut ainsi être au contact de la préparation alimentaire par ses deux faces.

On peut prévoir que le contenant est lui-même conforme à l'invention. Mais il peut aussi s'agir d'un contenant dont la paroi n'est pas en bois ou pas intégralement en bois, mais par exemple en métal ou en alliage tel que de l'acier inoxydable, ou encore en béton.

On prévoit enfin selon l'invention un procédé de régulation thermique d'un contenant de fermentation, d'élevage ou de stockage d'une préparation alimentaire, procédé dans lequel on fait circuler un fluide caloporteur dans une paroi en bois entre des faces de la paroi, la paroi étant une paroi du contenant ou une paroi reçue dans le contenant.

Ce procédé peut être mis en œuvre au moyen du contenant selon l'invention ou de l'échangeur thermique selon l'invention reçu dans un contenant.

### DESCRIPTION DES FIGURES

Nous allons maintenant présenter des modes de réalisation de l'invention à titre d'exemple non-limitatif à l'appui des dessins sur lesquels :
La figure 1 est une vue en élévation d'une cuve selon un premier mode de réalisation de l'invention avec arrachement ;
Les figures 2 et 3 sont des vues en perspective d'une douelle de la paroi latérale de la cuve de la figure 1 ;
Les figures 4 à 8 illustrent des résultats d'essai de la cuve de la figure 1 ;
La figure 9 est une vue en élévation d'une cuve selon un deuxième mode de réalisation de l'invention ;
La figure 10 est une vue en élévation de la même cuve montrant les échangeurs thermiques par transparence ;
La figure 11 est une vue en perspective montrant des éléments de la cuve de la figure 9 en cours d'assemblage ;
La figure 12 est une vue à plus grande échelle d'un détail de la figure 11 ;
La figure 13 est une vue de la partie arrière de la cuve de la figure 9 ; et
Les figures 14 et 15 illustrent des résultats d'essai de la cuve de la figure 9.

### Premier mode de réalisation

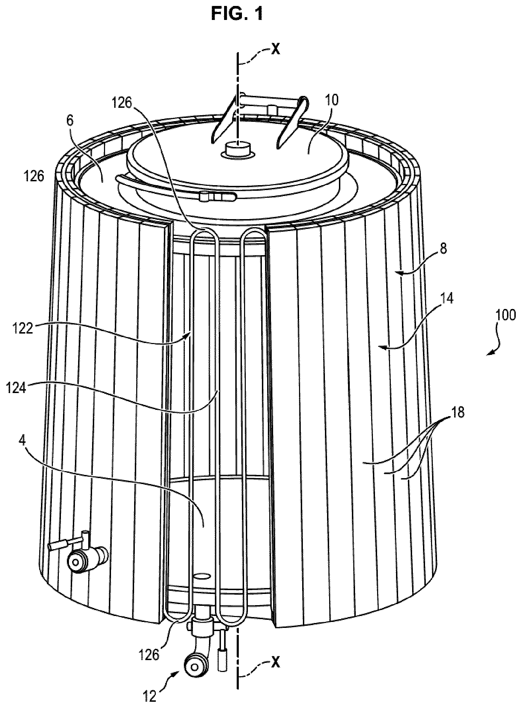

Nous allons décrire à l'appui des figures 1 à 8 une cuve 100 qui forme un contenant selon un premier mode de réalisation de l'invention.

Il s'agit d'une cuve de vinification, de fermentation, d'élevage ou de stockage d'une préparation alimentaire alcoolisée telle que du moût de vin.

Elle comprend trois parois principales formant respectivement :
- un fond horizontal 4 de la cuve en partie inférieure,
- un plafond horizontal 6 de la cuve en partie supérieure, et
- une paroi latérale tubulaire circonférentielle verticale 8.

La paroi latérale 8 présente dans cet exemple une légère courbure lui donnant une forme convexe. De plus, son diamètre va en diminuant légèrement du bas vers le haut. En dépit de cette courbure et en raison de cette diminution, une telle forme est habituellement désignée comme « tronconique » dans ce domaine.
présente des bords circulaires supérieur et inférieur reliés respectivement au fond 4 et au plafond 6.

La cuve présente un axe principal vertical X-X formant un axe de symétrie de révolution de la cuve.

La cuve 100 présente en l'espèce une ouverture supérieure dans son plafond sous la forme d'une trappe fermée par une porte 10 et donnant accès à l'intérieur de la cuve. Elle comprend aussi une vanne de vidange 12 en partie basse de la paroi latérale.

Les trois parois 4, 6 et 8 sont formées d'éléments en bois délimitant des faces externe 14 et interne 16 de la cuve.

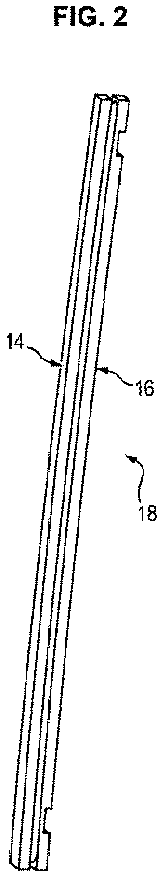

Dans la paroi latérale 8, ces éléments sont formés par des douelles 18 s'étendant chacune du bord supérieur au bord inférieur. Les douelles 18 ont chacune une forme générale de parallélépipède rectangle allongé, comme illustré à la figure 2, quoique la douelle soit légèrement incurvée puisque la paroi latérale 8 a une section horizontale dont le diamètre va en se rétrécissant du bas vers le haut dans le présent exemple. Les douelles sont juxtaposées les unes aux autres et maintenues dans cette position par des moyens adaptés connus en eux-mêmes et non-illustrés.

Comme illustré à la figure 1, la cuve comprend un serpentin 122 apte à recevoir un fluide caloporteur pour la régulation thermique de l'intérieur de la cuve et de la préparation alimentaire qu'elle contient. Il s'agit ici d'un tuyau souple.

En l'espèce, le serpentin 122 comprend des tronçons principaux rectilignes verticaux 124 s'étendant chacun dans un plan radial à l'axe X-X, suivant une direction parallèle à l'axe de la cuve et des parties de jonction 126 en arc de cercle les reliant les uns aux autres.

Il a ici une configuration en boustrophédon qui permet de faire circuler un fluide d'une extrémité à l'autre du serpentin en lui faisant parcourir l'intégralité de ce dernier. Il s'agit d'une configuration dans laquelle chaque ligne est reliée à la suivante par une seule extrémité, cette extrémité changeant d'une ligne à l'autre, comme dans une configuration en zig-zag.

Dans ce mode de réalisation, le serpentin, notamment ses tronçons principaux, s'étendant intégralement dans la paroi latérale 8 entre les faces interne 16 et externe 14. Les tronçons principaux 124 s'étendent suivant une direction parallèle aux faces interne et externe et intégralement à distance de ces dernières.

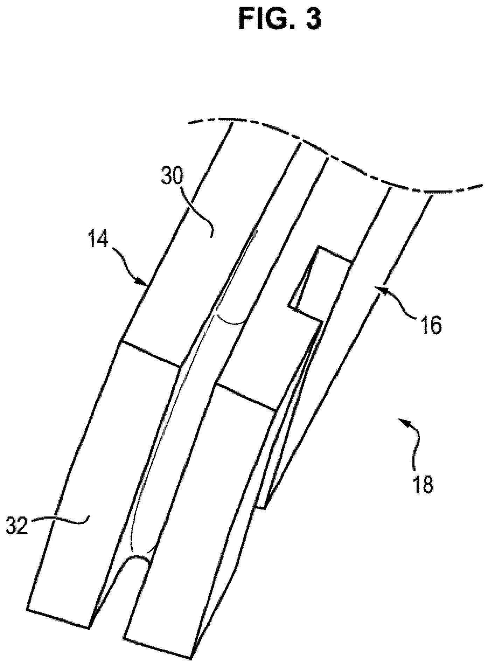

A cette fin, dans cet exemple, la paroi latérale présente des cavités formées par des rainures 128 usinées dans les chants des douelles 18 pour la réception du serpentin. Ces rainures sont visibles aux figures 2 et 3. Sur chaque douelle 18, la rainure 128 s'étend en l'espèce sur trois chants de la douelle, à mi-chemin de ses faces interne 16 et externe 14.

Sur les chants longitudinaux 30, la rainure 128 est dimensionnée pour accueillir une moitié longitudinale d'un tronçon principal. De la sorte, chaque tronçon principal 124 est reçu dans les rainures 128 de deux douelles respectives adjacentes en étant interposé entre celles-ci. Les deux rainures forment ainsi un logement fermé pour le tronçon principal 124. Un joint non illustré est interposé entre les chants longitudinaux pour assurer l'étanchéité de la cuve, comme cela est connu de façon classique.

Sur le chant d'extrémité 32 de la douelle, la rainure est dimensionnée par exemple pour accueillir toute la partie de jonction correspondante 126. Le serpentin se trouve donc entièrement logé dans l'épaisseur de la paroi latérale 8.

Pour l'assemblage des douelles 18 et du serpentin 122, on dispose le serpentin entre les douelles au fur et à mesure de la mise en place de ces dernières.

La cuve 100 comprend des moyens pour connecter le serpentin à une alimentation en fluide de régulation thermique, des moyens pour chauffer ou refroidir ce dernier et des moyens de commande automatisés de l'ensemble.

Grace à cet agencement, on peut assurer une régulation thermique de la cuve et de la préparation alimentaire qu'elle contient. Pour cela, on fait circuler un fluide caloporteur dans le serpentin 122 dans la paroi latérale 8, entre ses faces interne 16 et externe 14. En fonction du choix de régulation, ce fluide peut apporter des calories ou des frigories, à savoir il peut réchauffer ou refroidir la préparation.

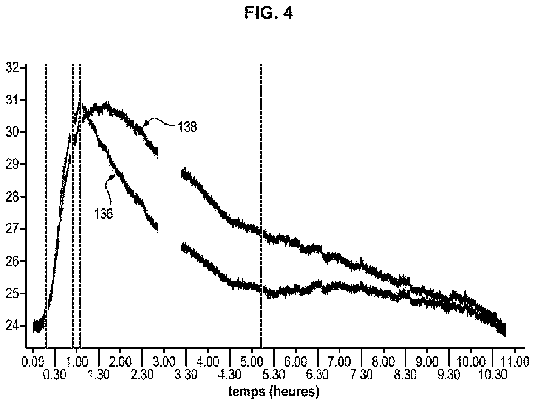

Ainsi, la figure 4 illustre des essais menés au moyen de cette cuve 100. La courbe 136, en partie basse sur la majeure partie du diagramme, illustre la température du fluide dans le serpentin 122 en ordonnée en fonction du temps en abscisse. L'autre courbe 138 illustre la température de l'intérieur de la cuve en fonction du temps. Les photographies infrarouges de la cuve qui vont être présentées sont prises au moyen d'une caméra thermique depuis l'extérieur de la cuve.

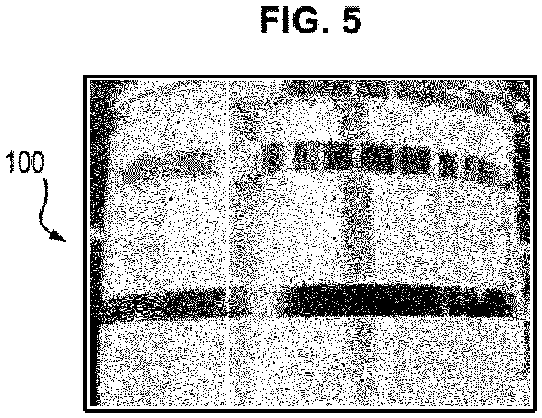

Pour cet essai, la cuve 100 est initialement vide. On injecte de la vapeur d'eau dans la cuve pendant 15 minutes. La figure 5 est une photographie infrarouge de la paroi 8 à l'issue de cette période.

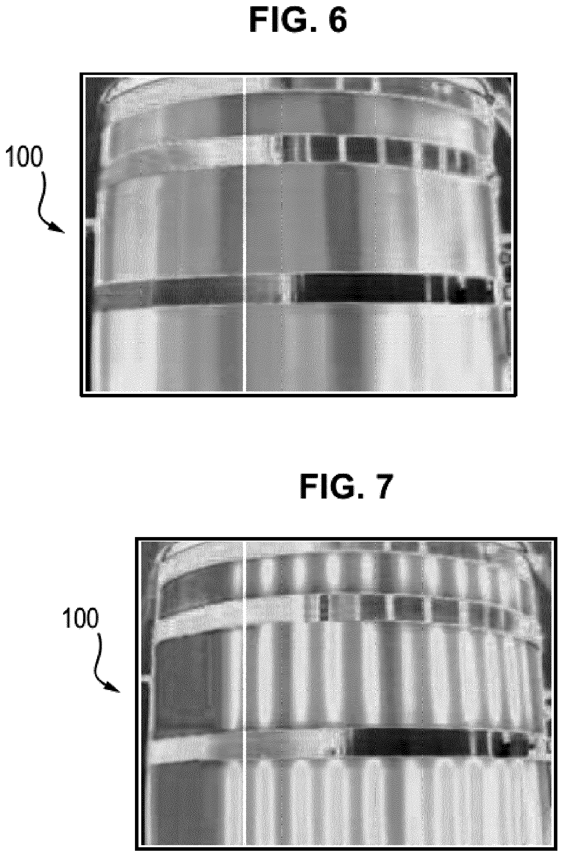

La paroi latérale 8 de la cuve subit ensuite de ce fait une montée en température pendant 35 minutes. La figure 6 est une photographie infrarouge de la paroi 8 à l'issue de cette période, qui apparait plus chaude.

Ensuite, on met en route la thermorégulation en faisant circuler dans le serpentin 122 un fluide de refroidissement pendant une heure et dix minutes. La figure 7 est une photographie infrarouge de la paroi 8 à l'issue de cette période, qui apparait plus froide, en particulier du niveau des chants des douelles 18 recevant les tronçons principaux 124 du serpentin.

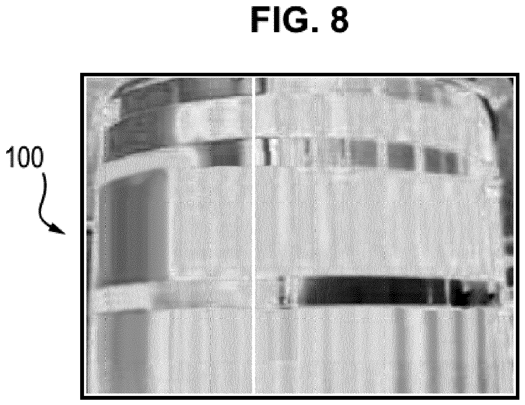

Enfin, la figure 8 est une photographie infrarouge de la paroi 8 à l'issue d'une période de 5 heures et 10 minutes de thermorégulation. La cuve apparait encore plus froide, et la température froide de la paroi latérale a gagné en uniformité.

### Deuxième mode de réalisation

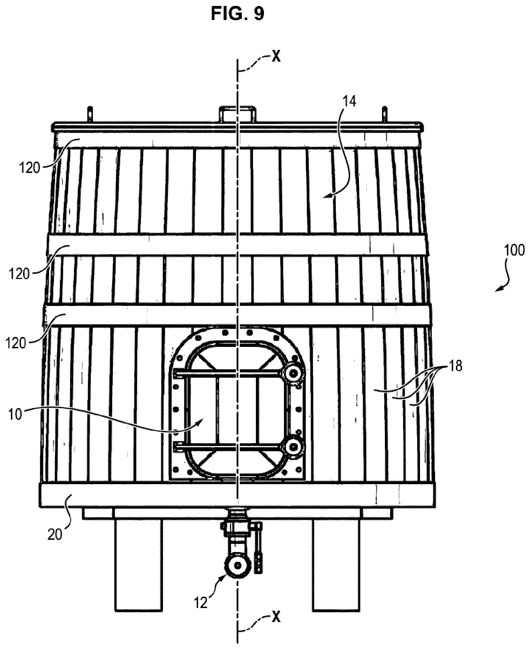

Nous allons maintenant décrire à l'appui des figures 9 à 15 une cuve 200 selon un deuxième mode de réalisation de l'invention. Seules les caractéristiques de la cuve qui sont différentes de celles du premier mode seront décrites. Certaines références numériques sont augmentées de 100.

Cette fois, la cuve 200 comprend une ouverture verticale située dans la moitié inférieure de la paroi latérale 8, obturée par une porte 10, en remplacement de la trappe supérieure.

Indépendamment de cela, la cuve 200 comprend cette fois deux serpentins 222a et 222b. Le serpentin 222a occupe la moitié supérieure de la paroi latérale 8 et l'autre 222b sa moitié inférieure.

Indépendamment de cela, chaque serpentin est ici rigide, par exemple en métal ou en alliage métallique tel que de l'acier inoxydable.

Indépendamment de cela, les tronçons principaux 224 de chaque serpentin s'étendent cette fois suivant une direction circonférentielle à l'axe X-X de la cuve 200 en ayant une forme en arc de cercle. Ces tronçons s'étendent dans des plans horizontaux, les uns au-dessus des autres, toujours dans l'épaisseur de la paroi latérale 8. Les tronçons principaux sont suffisamment courts pour laisser libre la partie avant de la paroi latérale 8 occupée par l'ouverture munie de la porte 10.

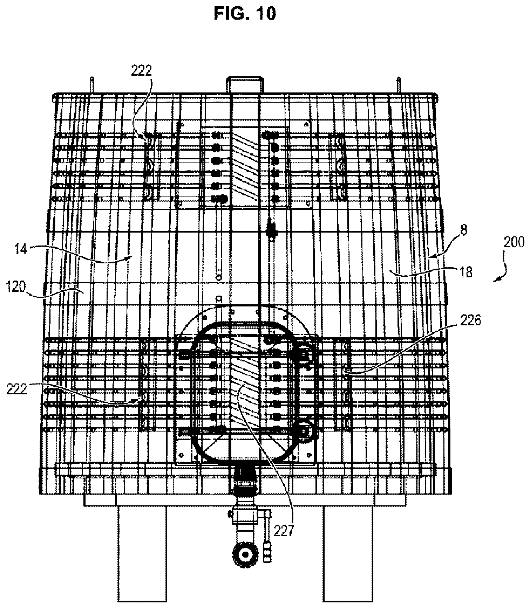

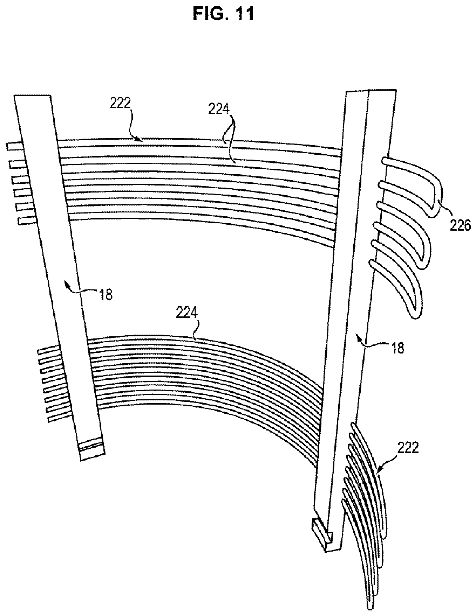

Les tronçons principaux 224 sont organisés par paire. Dans chaque paire, les deux tronçons principaux sont reliés à une extrémité par une partie de jonction en arc de cercle 226, comme illustré notamment à la figure 11. Ils ont ainsi une configuration en épingle. Ces parties de jonction courbes 226 s'étendent en partie avant de la paroi latérale, de part et d'autre de l'ouverture comme on le voit sur la figure 10. Un groupe d'épingles se trouve en partie gauche et l'autre groupe en partie droite, comme illustré à la figure 10. Les parties de jonction courbes 226 sont à la même hauteur d'un groupe à l'autre, les tronçons principaux 224 également.

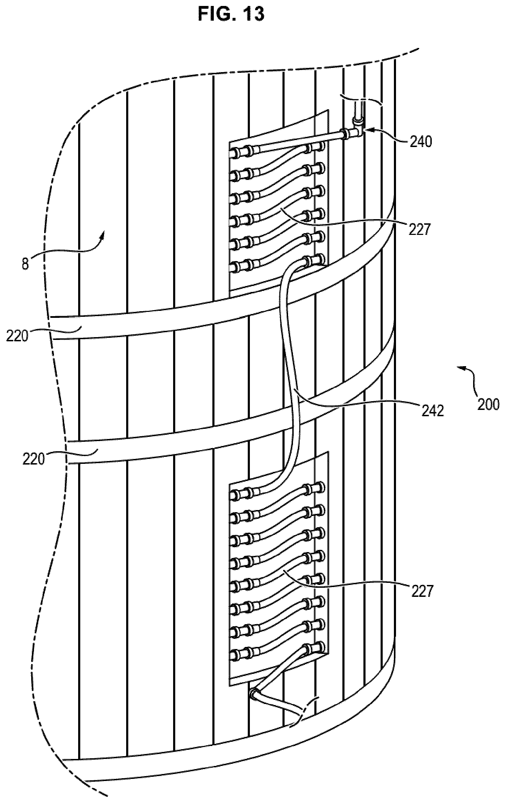

En référence à la figure 13, en partie arrière de la cuve 200, les autres extrémités des tronçons principaux 224 sont reliées par des parties de jonction rectilignes inclinées 227 assurant une transition d'un étage à l'autre et d'une épingle à l'autre du serpentin. Chaque partie de jonction rectiligne 227 relie un tronçon principal 224 du groupe de gauche au tronçon principal 224 du groupe de droite situé au niveau juste inférieur. Ces parties de jonction 227 sont réalisées en matériau souple, par exemple en élastomère.

Chaque serpentin 222a-b a donc à nouveau une disposition en boustrophédon qui permet de faire circuler un fluide d'une extrémité à l'autre du serpentin en lui faisant parcourir l'intégralité de ce dernier.

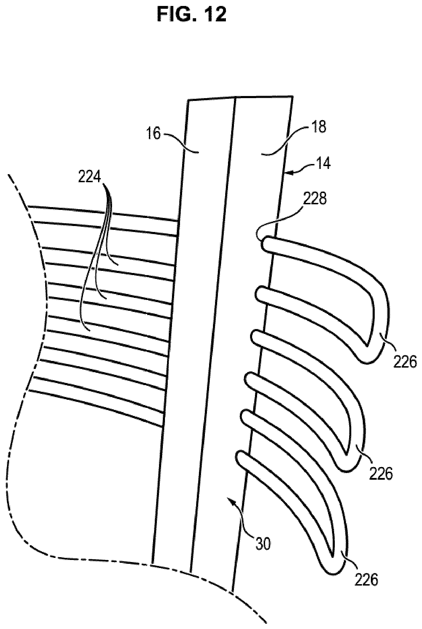

Les cavités de réception de chaque serpentin ne sont pas formées par des rainures dans les chants en l'espèce. En référence aux figures 11 et 12, elles sont ici formées chacune par un orifice 228 s'étendant d'un premier chant longitudinal de la douelle 18 à son deuxième chant longitudinal. Ainsi, alors que la rainure 128 était ouverte tout le long de la rainure dans le premier mode de réalisation, l'orifice 228 est fermé sur toute sa longueur et ouvert seulement à ses extrémités axiales. Cet orifice a un axe en arc de cercle, s'étendant dans un plan horizontal pour épouser la courbure de la paroi latérale 8.

Pour l'assemblage des douelles 18 et des serpentins 222, pour le groupe de gauche, on dispose une partie des douelles verticalement puis on installe les épingles du groupe dans les orifices. On installe ensuite une à une les autres douelles 18 en les enfilant sur les tronçons principaux des épingles et en les faisant coulisser le long de celles-ci. La figure 11 illustre ce montage en cours de réalisation. On procède séparément de la même façon pour le groupe de droite. Puis on termine l'assemblage avec les douelles 18 comprenant les parties de jonction rectilignes 227 en connectant ces dernières aux tronçons principaux des deux groupes.

A l'avant de la cuve, les douelles recevant les parties de jonction courbe 226 sont formées par des demi-douelles comprenant des rainures recevant les parties de jonction. Chaque demi-douelle forme seulement la moitié de l'épaisseur de la paroi latérale à cet endroit.

A l'arrière de la cuve, on effectue aussi la connexion du serpentin supérieur 222a au serpentin inférieur 222b au moyen d'un conduit 242 et la connexion de ceux-ci au circuit d'alimentation en fluide caloporteur au moyen d'un raccord 240.

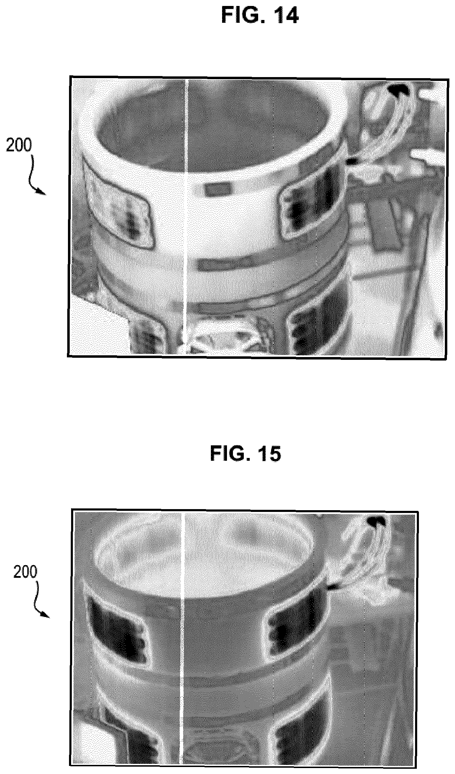

Les figures 13 et 14 illustrent des photographies infrarouges de la cuve 200 prises lors d'un essai, respectivement après une heure de fonctionnement de l'échangeur comme refroidisseur puis après 15 heures. Elles montrent à la fois l'intérieur et l'extérieur de la cuve dont le plafond a été ôté seulement au moment de la prise de vue. On observe que, au bout de 15 heures, la température à l'intérieur de la cuve est nettement plus fraiche qu'à l'extérieur. Les parties les plus froides de la paroi 8 correspondent aux zones occupées par les serpentins 222a, b.

### Troisième mode de réalisation

Dans un troisième mode de réalisation, on réalise un échangeur thermique comprenant :
- au moins une paroi principale en bois présentant des faces externes, et
- au moins un serpentin apte à recevoir un fluide caloporteur et s'étendant intégralement dans la paroi entre les faces externes.

Cet échangeur peut être réalisé par exemple au moyen de douelles. Il peut s'agir d'un échangeur de type drapeau. Il peut avoir une forme rectangulaire plate.

On le dispose dans un contenant tel qu'une cuve similaire à celle des deux premiers modes de réalisation. La cuve peut être conforme à l'un de ces modes mais ce n'est pas obligatoire et ses propres parois peut être dépourvues de serpentins.

On dispose l'échangeur dans l'enceinte interne de la cuve et de sorte que les faces externes de l'échangeur s'étendent dans l'enceinte. S'il est de type drapeau, il s'étend dans la cuve suivant un plan vertical ayant une orientation radiale par référence à l'axe de la cuve. Il s'étend donc depuis l'axe en direction de la paroi de la cuve, d'un seul côté de l'axe. Comme précédemment, on relie le serpentin de l'échangeur à un circuit de fluide caloporteur.

Pour mettre en œuvre le procédé de régulation thermique de la cuve et/ou de la préparation dans ce cas, on fait circuler un fluide caloporteur dans l'échangeur, dans sa paroi en bois entre les faces de la paroi.

On pourra apporter à l'invention de nombreuses modifications sans sortir du cadre de celle-ci.

### Conclusion

Bien que l'invention ait été présentée dans deux modes de réalisation avec le ou les serpentins intégrés à la paroi latérale, il est possible d'intégrer au moins un serpentin dans le fond 4, le plafond 6 une paroi d'extrémité, ou encore à la fois dans plusieurs de ces parois.

Le serpentin de la paroi latérale pourra avoir une configuration différente de celles des deux premiers modes de réalisation, par exemple une configuration combinant ces deux modes.

L'invention est applicable à des contenants et des récipients variés. Elle a été décrite en détail dans deux exemples dans lesquels le contenant forme une cuve. Elle est également applicable à d'autres contenants. Il peut s'agir par exemple d'un foudre, qui est un récipient qui présente lui aussi une forme à symétrie de révolution mais dont l'axe est horizontal. Il est intéressant alors que la paroi latérale et les deux parois verticales d'extrémité soient équipées d'un serpentin conformément à l'invention.

## Revendications

1. Contenant (100 ; 200) de fermentation, d'élevage ou de stockage d'une préparation alimentaire,
le contenant comprenant :
- au moins une paroi principale (8) en bois présentant des faces interne (16) et externe (14), et
- au moins un serpentin (122 ; 222a-b) apte à recevoir un fluide caloporteur et comprenant des tronçons principaux (124 ; 224) s'étendant intégralement dans la paroi entre les faces interne et externe.

2. Contenant (100 ; 200) selon la revendication précédente dans lequel les tronçons principaux (124 ; 224) s'étendent suivant une direction parallèle aux faces interne (16) et externe (14).

3. Contenant (100 ; 200) selon l'une des revendications précédentes dans lequel les tronçons principaux (124 ; 224) s'étendent intégralement à distance des faces interne (16) et externe (14), par exemple à égale distance des faces interne (16) et externe (14).

4. Contenant (100 ; 200) selon l'une des revendications précédentes dans lequel la paroi principale (8) est une paroi latérale.

5. Contenant (100 ; 200) selon l'une des revendications précédentes dans lequel la paroi principale (8) est une paroi de fond (4), un plafond (6) ou une paroi d'extrémité du contenant.

6. Contenant (100 ; 200) selon l'une des revendications précédentes dans lequel la paroi (8) comprend des éléments de paroi (18), au moins certains des éléments de paroi présentant au moins une cavité (128 ; 228) recevant le serpentin (122 ; 222a-b).

7. Contenant (100) selon la revendication précédente dans lequel la cavité comprend une rainure (128).

8. Contenant (100) selon la revendication précédente dans lequel la rainure (128) s'étend sur au moins deux chants (30, 32) de l'élément de paroi, par exemple sur trois chants.

9. Contenant (100) selon la revendication précédente dans lequel au moins un des tronçons principaux (124) est reçu dans les rainures (128) de deux des éléments de paroi respectifs (18) en étant interposé entre les éléments de paroi.

10. Contenant (200) selon l'une des revendications 6 à 9 dans lequel la cavité comprend un orifice (228) s'étendant d'un premier chant (30) de l'élément de paroi à un deuxième chant (30) de l'élément de paroi.

11. Contenant (100) selon l'une des revendications précédentes dans lequel au moins certains des tronçons principaux (124) s'étendent suivant une direction parallèle à un axe (X-X) du contenant.

12. Contenant (200) selon l'une des revendications précédentes dans lequel au moins certains des tronçons principaux (224) s'étendent suivant une direction circonférentielle à un axe (X-X) du contenant.

13. Echangeur thermique comprenant :
- au moins une paroi principale en bois présentant des faces externes, et
- au moins un serpentin apte à recevoir un fluide caloporteur et s'étendant intégralement dans la paroi entre les faces externes.

14. Contenant de fermentation, d'élevage ou de stockage d'une préparation alimentaire,
le contenant comprenant :
- au moins une paroi délimitant une enceinte interne du contenant, et
- au moins un échangeur conforme à la revendication 13 et reçu dans l'enceinte de sorte que les faces externes de l'échangeur s'étendent dans l'enceinte.

15. Procédé de régulation thermique d'un contenant (100 ; 200) de fermentation, d'élevage ou de stockage d'une préparation alimentaire,
procédé dans lequel on fait circuler un fluide caloporteur dans une paroi (8) en bois entre des faces (14, 16) de la paroi, la paroi étant une paroi du contenant ou une paroi reçue dans le contenant.

## Patentansprüche

1. Behälter (100; 200) zur Gärung, Reifung oder Lagerung einer Lebensmittelzubereitung,
wobei der Behälter umfasst:
- mindestens eine Hauptwand (8) aus Holz mit einer Innen- (16) und einer Außenseite (14), und
- mindestens eine Rohrschlange (122; 222a-b), die zur Aufnahme eines Wärmeträgerfluids geeignet ist und Hauptabschnitte (124; 224) umfasst, die sich vollständig in der Wand zwischen der Innen- und der Außenseite erstrecken.

2. Behälter (100; 200) nach vorhergehendem Anspruch, wobei sich die Hauptabschnitte (124; 224) in einer Richtung parallel zu der Innen- (16) und Außenseite (14) erstrecken.

3. Behälter (100; 200) nach einem der vorhergehenden Ansprüche, wobei sich die Hauptabschnitte (124; 224) vollständig in einem Abstand von der Innen- (16) und Außenseite (14) erstrecken, beispielsweise in gleichem Abstand von der Innen- (16) und Außenseite (14).

4. Behälter (100; 200) nach einem der vorhergehenden Ansprüche, wobei die Hauptwand (8) eine Seitenwand ist.

5. Behälter (100; 200) nach einem der vorhergehenden Ansprüche, wobei die Hauptwand (8) eine Bodenwand (4), eine Decke (6) oder eine Endwand des Behälters ist.

6. Behälter (100; 200) nach einem der vorhergehenden Ansprüche, wobei die Wand (8) Wandelemente (18) umfasst, wobei zumindest einige der Wandelemente zumindest einen Hohlraum (128; 228) aufweisen, der die Rohrschlange (122; 222a-b) aufnimmt.

7. Behälter (100) nach vorhergehendem Anspruch, wobei der Hohlraum eine Nut (128) umfasst.

8. Behälter (100) nach vorhergehendem Anspruch, wobei sich die Nut (128) über mindestens zwei Kanten (30, 32) des Wandelements erstreckt, beispielsweise über drei Kanten.

9. Behälter (100) nach vorhergehendem Anspruch, wobei mindestens einer der Hauptabschnitte (124) in den Nuten (128) von zwei der jeweiligen Wandelemente (18) aufgenommen ist, indem er zwischen den Wandelementen angeordnet ist.

10. Behälter (200) nach einem der Ansprüche 6 bis 9, wobei der Hohlraum eine Öffnung (228) umfasst, die sich von einer ersten Kante (30) des Wandelements zu einer zweiten Kante (30) des Wandelements erstreckt.

11. Behälter (100) nach einem der vorhergehenden Ansprüche, wobei sich zumindest einige der Hauptabschnitte (124) in einer Richtung parallel zu einer Achse (X-X) des Behälters erstrecken.

12. Behälter (200) nach einem der vorhergehenden Ansprüche, wobei sich mindestens einige der Hauptabschnitte (224) in einer Richtung erstrecken, die zu einer Achse (X-X) des Behälters umlaufend ist.

13. Wärmetauscher, umfassend:
- mindestens eine Hauptwand aus Holz mit Außenseiten, und
- mindestens eine Rohrschlange, die zur Aufnahme eines Wärmeträgerfluids geeignet ist und sich vollständig in der Wand zwischen den Außenseiten erstreckt.

14. Behälter zur Gärung, Reifung oder Lagerung einer Lebensmittelzubereitung,
wobei der Behälter umfasst:
- mindestens eine Wand, die einen Innenraum des Behälters begrenzt, und
- mindestens einen Wärmetauscher nach Anspruch 13, der in dem Innenraum derart aufgenommen ist, dass sich die Außenseiten des Wärmetauschers im Innenraum erstrecken.

15. Verfahren zur Temperaturregelung eines Behälters (100; 200) zur Gärung, Reifung oder Lagerung einer Lebensmittelzubereitung,
wobei bei dem Verfahren ein Wärmeträgerfluid in einer Wand (8) aus Holz zwischen Seiten (14, 16) der Wand in Zirkulation versetzt wird, wobei die Wand eine Wand des Behälters oder eine in dem Behälter untergebrachte Wand ist.

## Claims

1. Container (100; 200) for fermenting, maturing or storing a food preparation,
the container comprising:
- at least one main wall (8) made of wood having inner (16) and outer (14) faces, and
- at least one coil (122; 222a-b) capable of receiving a heat transfer fluid and comprising main sections (124; 224) extending integrally within the wall between the inner and outer faces.

2. Container (100; 200) according to the preceding claim, wherein the main sections (124; 224) extend in a direction parallel to the inner (16) and outer (14) faces.

3. Container (100; 200) according to one of the preceding claims, wherein the main sections (124; 224) extend entirely at a distance from the inner (16) and outer (14) faces, for example at an equal distance from the inner (16) and outer (14) faces.

4. Container (100; 200) according to one of the preceding claims, wherein the main wall (8) is a side wall.

5. Container (100; 200) according to one of the preceding claims, wherein the main wall (8) is a bottom wall (4), a ceiling (6) or an end wall of the container.

6. Container (100; 200) according to one of the preceding claims, wherein the wall (8) comprises wall elements (18), at least some of the elements having at least one cavity (128; 228) receiving the coil (122;222a-b).

7. Container (100) according to the preceding claim, wherein the cavity comprises a groove (128).

8. Container (100) according to the preceding claim, wherein the groove (128) extends over at least two edges (30, 32) of the wall element, for example over three edges.

9. Container (100) according to the previous claim, wherein at least one of the main sections (124) is received in the grooves (128) of two of the respective wall elements (18) by being interposed between the wall elements.

10. Container (200) according to one of claims 6 to 9, wherein the cavity comprises an opening (228) extending from a first edge (30) of the wall member to a second edge (30) of the wall member.

11. Container (100) according to one of the preceding claims, wherein at least some of the main sections (124) extend in a direction parallel to an axis (X-X) of the container.

12. Container (200) according to one of the preceding claims, wherein at least some of the main sections (224) extend in a direction circumferential to an axis (X-X) of the container.

13. Heat exchanger comprising:
- at least one main wooden wall with external faces, and
- at least one coil capable of receiving a heat transfer fluid and extending integrally within the wall between the external faces.

14. Container for fermenting, maturing or storing a food preparation,
the container comprising:
- at least one wall delimiting an internal chamber of the container, and
- at least one exchanger according to claim 13 and received within the chamber so that the external faces of the exchanger extend into the enclosure.

15. Method for regulating the temperature of a container (100; 200) for fermentation, maturing or storage of a food preparation, in which a heat transfer fluid is circulated in a wooden wall (8) between faces (14, 16) of the wall, the wall being a wall of the container or a wall received in the container.
